# EUROPEAN PATENT SPECIFICATION

(11) **EP 4 051 514 B1**
(45) Date of publication and mention of the grant of the patent: **12.11.2025**
(21) Application number: 20796939.5
(22) Date of filing: 14.10.2020
(51) Int. Cl.: B60C 7/10, C08L 21/00

(54) **SOLID TYRE PROVIDED WITH MEANS FOR SIGNALLING THE STATE OF EXCESSIVE WEAR**
VOLLREIFEN MIT VORRICHTUNG ZUR SIGNALISIERUNG DES ZUSTANDES EINES ÜBERMÄSSIGEN VERSCHLEISSES
PNEUMATIQUE PLEIN MUNI DE MOYENS DE SIGNALISATION DE L'ÉTAT D'USURE EXCESSIVE

(30) Priority: 30.10.2019 IT 201900020092
(43) Date of publication of application: 07.09.2022
(73) Proprietor: YOKOHAMA TWS SOCIETÀ PER AZIONI, 00019 Tivoli (RM) (IT)
(72) Inventor: ABBATI, Gianluca, 00034 Colleferro (RM) (IT); MELORO, Gianluca, 00012 Guidonia Montecelio (RM) (IT); GUNASEKARA, Dinesh, Pilimathalawa 20450 (LK); PRADEEPA, Sumudu, Kochchikade 11540 (LK); SGRECCIA, Mario, 00047 Marino (RM) (IT)
(74) Representative: Ottazzo, Marco Francesco Agostino
(86) International application number: PCT/IB2020/059649
(87) International publication number: WO 2021/084360

(56) References cited:
- WO-A1-2019/092756
- AU-A1- 2016 235 035
- US-A1- 2014 041 774
- DATABASE WPI Week 200719, Derwent World Patents Index; AN 2007-189117, XP002799440

## Description

The present invention generally concerns a solid tyre and, in particular, a solid tyre provided with means capable of signalling the excessive wear thereof. Even more in particular, the invention concerns a solid tyre provided with means for visually signalling the state of excessive wear.

As is known, in industrial and commercial applications tyres that are not inflated with air, but are provided with a structure made of solid rubber and plastic composites, are often used. This structure, obtained by moulding operations, is particularly resistant to punctures and has an increased load capacity. By way of example, the solid tyres are used on various types of industrial vehicles and operating means. In particular, one of the most common applications for solid tyres is that of equipment for handling materials (forklifts).

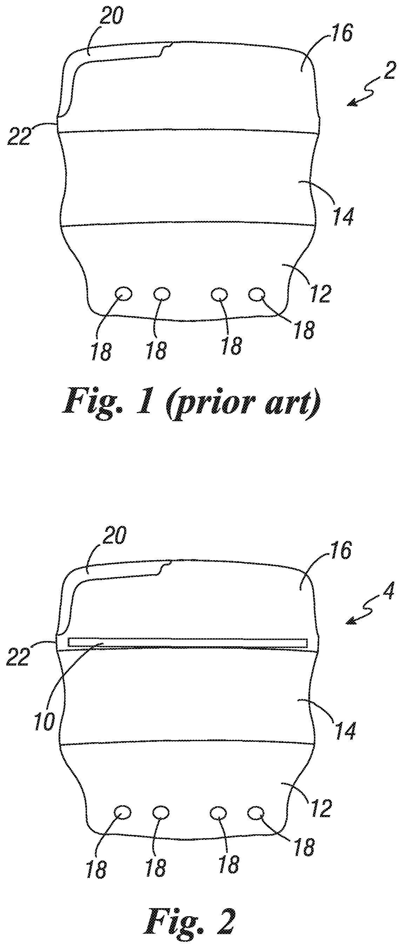

A first type of solid tyre is represented by the so-called super-elastic tyres or "resilient tyres". Structurally, with reference to Figure 1, in which the thickness of a super-elastic tyre according to the prior art is shown in a cross-sectional view, this type of tyre, indicated as a whole by the reference numeral 2, is formed by two or more circular layers made of elastic material and overlapped in a radial direction. These layers form, proceeding from the centre of the super-elastic tyre 2 towards the periphery, and internal portion named bead 12, an intermediate portion simply named middle portion 14 and an external portion named tread 16.

In particular, the bead 12 is the portion of the super-elastic tyre 2 that is mounted around the wheel rim, which in turn is made integral with the axle that brings the wheel into rotation, whereas the tread 16 is the portion of the structure of the super-elastic tyre 2 that comes into contact with the ground on which the wheel rotates. The middle portion 14 is instead the portion of the structure which is delegated with the function of guaranteeing the elasticity of the super-elastic tyre 2. For the aforementioned reasons, the bead 12 and the tread 16 must be manufactured with particularly resistant materials.

More in particular, the structure of the super-elastic tyre 2 can be reinforced by a plurality of metal strands 18 at the bead 12, whereas the tread 16 can be slick or can be provided with grooves 20 the number, shape and depth of which vary according to the use intended for the super-elastic tyre 2.

In the case of super-elastic tyres designed to be used on low speed vehicles (typically less than 25 km/h), the function of the grooves of the tread is nevertheless of little importance. In fact, the service life of this type of super-elastic tyre does not depend upon the wear of the grooves of the tread, but rather on the wear of the tread itself in its totality. The middle portion, in fact, if deprived of the coverage offered by a sufficient thickness of the tread, is not capable of guaranteeing characteristics appropriate for the use of the super-elastic tyre.

For this reason, with reference again to Figure 1, the super-elastic tyres 2 are equipped with indicators of excessive wear, consisting of a raised circular portion 22 which is arranged on the shoulder of the super-elastic tyre 2, namely on the lateral part of the super-elastic tyre 2, in particular to the sides of the area in contact between the tread 16 and the middle portion 12. Each of these raised circular portions 22, that have the function of indicating the excessive wear, is known with the name *"60J line".*

However, often users of the super-elastic tyres are asked to replace them with new tyres when the level of wear has reached the bottom of the grooves of the tread. According to the type of super-elastic tyre, namely according to the type of use it is intended for, the bottom of the grooves of the tread is reached well before reaching the excessive point of wear of the super-elastic tyre. In other words, the bottom of the grooves can be reached well before reaching the *"60J line".* In some cases, the thickness of the remaining tread useful for protecting the middle portion and ensuring the correct operation of the super-elastic tyre can be equal to even 20-40% of the initial thickness. Consequently, the users of this type of super-elastic tyre are wrongly complaining that the actual service life does not correspond to the one declared by the manufacturer. In light of what has been described above, it will become clear that the solution offered by indicators of excessive wear according to the prior art, and in particular by the *"60J line",* do not meet the need of indicating to the user the actual reaching of the end of the service life of this type of super-elastic tyre.

Therefore, super-elastic tyres provided with means for visually signalling the state of excessive wear have been achieved. These means for visually signalling the state of excessive wear allow users to exploit the super-elastic tyre to the limit of its potentiality, namely until reaching the end of the actual service life of the super-elastic tyre itself. For example, the document GB 2505034 A, filed in the name of the same applicant, shows a super-elastic tyre provided with means for visually signalling the state of excessive wear. These visually signalling means have colours that are different from the colour of the tread, in order to efficiently signal the actual reaching of the end of service life of the super-elastic tyre and, at the same time, to sufficiently reassure the user that the excessive state of wear has not yet been reached.

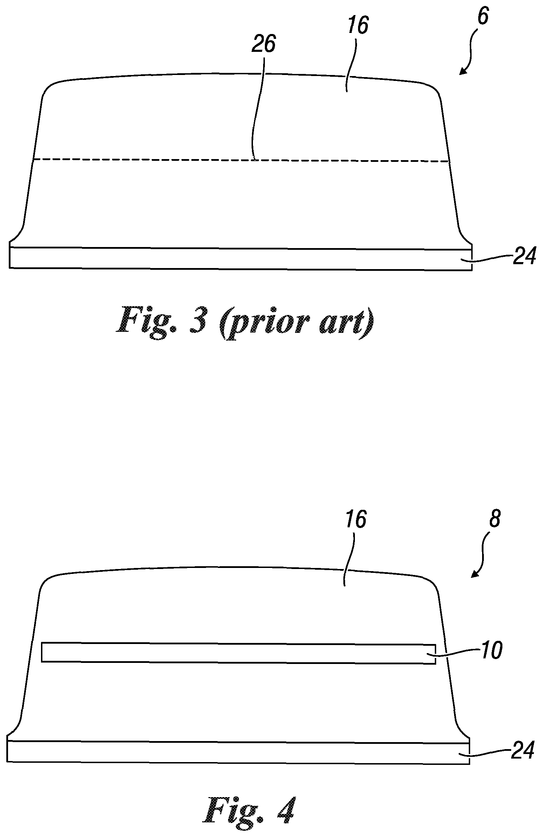

A second type of solid tyre is furthermore known, known with the acronyms POS *("Press On Steel*") or POB *("Press On Band").* Structurally, with reference to Figure 3, wherein the thickness of a POS/POB tyre according to the prior art is shown in a cross-sectional view, this type of tyre, indicated as a whole with the reference numeral 6, is always formed of two or more circular layers overlapped in a radial direction. These layers are not however all made of elastic material. Proceeding from the centre of the POS/POB tyre 6 towards the periphery, the following can in fact be identified: an internal portion consisting of a metal ring 24, configured to simplify the mounting of the POS/POB tyre 6 around the wheel rim, and the normal external portion or tread 16, which is made of elastic material and is fitted around the metal ring 24.

The difference between a POS/POB tyre and a super-elastic tyre consists in the fact that for the POS/POB tyre no maximum limit of wear for the tread has been clearly and officially established. There is only one recommendation from the European Tire and Rim Technical Organization (ETRTO), which identifies this wear limit at 1/3 of the tread thickness. A similar US association (TRA or *"Tire and Rim Association")* does not, however, provide any recommendations for this type of solid tyre.

Identifying the wear limit of the tread of a POS/POB tyre is therefore entrusted to the manufacturer of the POS/POB tyre. For example, again with reference to Figure 3, the POS/POB tyre 6 can be provided, in a predefined position inside the corresponding tread 16, with a so-called wear limit 26 which is designed to indicate the point of excessive wear of the tread 16 itself. In other words, once the wear limit 26 is reached, after deterioration of the tread 16, the POS/POB tyre 6 must be replaced.

Means for visually signalling the state of excessive wear have also been disclosed for POS/POB tyres, such as, for example, those shown in the document WO 2019/092756 A1 filed in the name of the same applicant. The applicant has, however, observed that these visual signalling means, whether mounted on super-elastic tyres or on POS/POB tyres, can be manufactured with a particularly bright colour, and therefore easier to see, if fabricated with a specific compound of materials. In addition, this specific compound of materials can also make the visual signalling means, and consequently also the entire solid tyre, less hysteretic and therefore less subject to the development of heat.

Document KR 20060103755 A discloses a tyre comprising a coloured layer for indicating excessive wear. However, the tyre according to document KR 20060103755 A is not a solid tyre and its coloured layer has no components to enhance its visibility.

Document AU 2016235035 A1 discloses a solid tyre with means of visual indication of the state of excessive wear. However, not even the visual means indicating the excessive wear state of the tyre according to document AU 2016235035 A1 have components that enhance its visibility.

Finally, document US 2014/041774 A1 discloses another solid tyre with means of visual indication of the state of excessive wear, but no components that enhance the visibility of said visual means indicating the excessive wear state are disclosed.

An object of the present invention is therefore that of manufacturing a solid tyre that is able to solve the aforementioned drawbacks of the prior art in an extremely simple, inexpensive and particularly functional manner.

In detail, an object of the present invention is that of manufacturing a solid tyre provided with means for visually signalling the excessive state of wear which are easier to see compared to similar solid tyres of a known type.

Another object of the present invention is that of manufacturing a solid tyre provided with means for visually signalling the state of excessive wear which are resistant compared to similar solid tyres of a known type.

These and other objects according to the present invention are achieved by manufacturing a solid tyre as disclosed in claim 1.

Further characteristics of the invention are outlined in the dependent claims, which form an integral part of the present invention.

The characteristics and advantages of a solid tyre according to the present invention will be clearer from the following description, which is explanatory and nonlimiting, with reference to the attached schematic drawings, in which:
Figure 1 is a cross-sectional view of the thickness of a super-elastic tyre according to the prior art;
Figure 2 is a cross-sectional view of the thickness of a first example of an embodiment (super-elastic tyre) of a solid tyre provided with means for visually signalling the state of excessive wear according to the present invention;
Figure 3 is a cross-sectional view of the thickness of a POS/POB tyre according to the prior art; and
Figure 4 is a cross-sectional view of the thickness of a second embodiment (POS/POB tyre) of a solid tyre provided with means for visually signalling the state of excessive wear according to the present invention.

With particular reference to Figures 2 and 4, two preferred embodiments of a solid tyre according to the present invention are shown. In detail, in figure 2 the solid tyre consists of a super-elastic tyre, indicated as a whole by the reference numeral 4, whereas in figure 4 the solid tyre consists of a POS/POB tyre, indicated as a whole by the reference numeral 8.

Both the super-elastic tyre 4 and the POS/POB tyre 8 are substantially formed by the same parts that respectively form the super-elastic tyres and the POS/POB tyres according to the prior art. The same reference numerals previously stated have therefore been used for these parts. Therefore, in general, the solid tyre 4 or 8 comprises two or more circular layers overlapped in a radial direction, wherein at least the outermost layer is made of an elastic material and consists of an external portion or tread 16.

The solid tyre 4 or 8 comprises, in addition, at least one layer for indicating excessive wear 10, arranged in a predefined position inside the external portion or tread 16. For example, in the super-elastic tyre 4 the layer for indicating excessive wear 10 can be positioned in the external portion or tread 16 at the raised circular portion 22 (*"60J line"*)*,* whereas in the POS/POB tyre 8 said layer for indicating excessive wear 10 can be positioned in the external portion or tread 16 at the wear limit 26.

The layer for indicating excessive wear 10 is in any case made with a colour that can be clearly distinguished from the colour of the tread 16. In particular, the layer for indicating excessive wear 10 is made with a colour different from that of the tread 16. In this manner, when the wear of the tread 16 is such that the layer for indicating excessive wear 10 becomes exposed, it is immediately and easily visible.

According to the invention, the layer for indicating excessive wear is manufactured with the following compound of materials in the following percentages by weight:
- rubber: 50%/60%;
- silica: 20%/30%;
- one or more plasticising additives: 2%/8%;
- one or more compatibilizing agents between rubber and silica: 2%/3%;
- pigments: 3%/8%;
- one or more protective agents: 1%;
- one or more crosslinking agents: 3%/8%.

The rubber can be both of a synthetic type and a natural type. Mineral binders are also added to the pigments, so that the binding of pigments with mineral binders gives rise to a mineral colour.

In particular, the protective agents are of the so-called "no-staining" type and contribute to keeping the mineral colour brighter, thus avoiding at the same time the migration of colouring components onto the surface of the compound. The protective agents furthermore contribute to reducing the ageing effect of the rubber. A special category of non-staining protective agents, typically used in the compound, consisting of the category of the hindered phenols known, for example, with the commercial names *"Wingstay L"* and *"Lowinox GP 45".*

One of the main performance requirements of a solid tyre is its resistance to accumulation of heat. During its use, the solid tyre is continuously subject to cycles of fatigue due to its rotational speed and the combinations of loads that bear thereon. These cycles of fatigue generate heat, which accumulates inside the solid tyre. If the work cycles are long and if each lasts more than eight hours a day, the solid tyre does not have time to rest and cool down. If the internal temperature of the solid tyre exceeds 130°C, its ageing is accelerated and the solid tyre can degrade more easily.

The silica and the compatibilizers between rubber and silica (that can be selected from the category of silanes such as, for example, vinyltrimethoxysilane) create a special compound that makes the solid tyre 4 or 8 less hysteretic, and therefore less subject to the development of heat, when compared to similar solid tyres according to the prior art. In fact, since the layer for indicating excessive wear 10 comprises the aforementioned compound, said layer for indicating excessive wear 10 generates a discontinuity in the solid tyre 4 or 8, reducing the accumulated heat and making the solid tyre 4 or 8 suitable for heavy duty (2-3 consecutive shifts or work cycles of 18-24 hours).

It has thus been seen that the solid tyre according to the present invention has achieved the aforementioned objects.

The solid tyre of the present invention thus conceived is however susceptible to numerous modifications and variations, all falling within the same inventive concept; furthermore, all the details are replaceable with technically equivalent elements. In practice the materials used, as well as the shapes and sizes, can be of any type according to the technical needs.

The scope of protection of the invention is therefore defined by the attached claims.

## Claims

1. A solid tyre (4; 8) comprising two or more circular layers overlapped in a radial direction, wherein at least the outermost layer is made of an elastic material and consists of an external portion or tread (16), wherein said solid tyre (4; 8) further comprises at least one layer for indicating excessive wear (10), arranged in a predefined position inside said external portion or tread (16), and wherein said at least one layer for indicating excessive wear (10) is made with a colour different from that of said external portion or tread (16), said solid tyre (4; 8) being **characterized in that** said at least one layer for indicating excessive wear (10) is manufactured with the following compound of materials in the following percentages by weight:
- rubber: 50%/60%;
- silica: 20%/30%;
- one or more plasticising additives: 2%/8%;
- one or more compatibilizing agents between rubber and silica: 2%/3%;
- pigments: 3%/8%;
- one or more protective agents: 1%;
- one or more crosslinking agents: 3%/8%,
wherein mineral binders are added to the pigments, in such a way that the binding of said pigments and said mineral binders gives rise to a mineral colour.

2. The solid tyre (4; 8) according to claim 1, **characterized in that** the rubber is of the synthetic type.

3. The solid tyre (4; 8) according to claim 1, **characterized in that** the rubber is of the natural type.

4. The solid tyre (4; 8) according to any claims 1 to 3, **characterized in that** the protective agents of the so-called "no-staining" type and contribute to keeping said mineral colour brighter, thus avoiding the migration of colouring components onto the surface of the compound.

5. The solid tyre (4; 8) according to claim 4, **characterized in that** the protective agents are selected in the category of the hindered phenols.

6. The solid tyre (4; 8) according to any claims 1 to 5, **characterized in that** the compatibilizing agents between rubber and silica are selected in the category of silanes.

7. The solid tyre (4; 8) according to any claims 1 to 6, **characterised in that** it consists of a super-elastic tyre (4) comprising a plurality of circular layers of elastic material overlapped in a radial direction, said layers forming, proceeding from the centre of the super-elastic tyre (4) towards the periphery, an internal portion or bead (12), an intermediate portion or middle portion (14) and said external portion or tread (16).

8. The solid tyre (4; 8) according to claim 7, **characterized in that** it further comprises a raised circular portion (22), arranged on the shoulder of the super-elastic tyre (4) at the sides of the contact area between said external portion or tread (16) and said intermediate portion or middle portion (14).

9. The solid tyre (4; 8) according to claim 8, **characterized in that** said at least one layer for indicating excessive wear (10) is positioned in said external portion or tread (16) at said raised circular portion (22).

10. The solid tyre (4; 8) according to any claims 1 to 6, **characterized in that** it consists of a POS/POB tyre (8) comprising, proceeding from the centre of the POS/POB tyre (8) towards the periphery, an internal portion consisting of a metal ring (24) and said external portion or tread (16), which is fitted around said metal ring (24).

11. The solid tyre (4; 8) according to claim 10, **characterized in that** it further comprises, in a predefined position inside said external portion or tread (16), a wear limit (26) which is designed to indicate the point of excessive wear of said external portion or tread (16).

12. The solid tyre (4; 8) according to claim 11, **characterized in that** said at least one layer for indicating excessive wear (10) is positioned in said external portion or tread (16) at said wear limit (26).

## Patentansprüche

1. Vollreifen (4; 8), umfassend zwei oder mehrere kreisförmige Schichten, die sich in radialer Richtung überlappen, wobei zumindest die äußerste Schicht aus einem elastischen Material gefertigt ist und aus einem äußeren Abschnitt oder Lauffläche (16) besteht, wobei der Vollreifen (4; 8) ferner mindestens eine Schicht zum Angeben von übermäßigem Verschleiß (10) umfasst, die an einer vordefinierten Position innerhalb des äußeren Abschnitts oder Lauffläche (16) angeordnet ist, und wobei die mindestens eine Schicht zum Angeben von übermäßigem Verschleiß (10) mit einer Farbe gefertigt ist, die sich von der Farbe des äußeren Abschnitts oder Lauffläche (16) unterscheidet, wobei der Vollreifen (4; 8) **dadurch gekennzeichnet ist, dass** die mindestens eine Schicht zum Angeben von übermäßigem Verschleiß (10) mit der folgenden Materialzusammensetzung in den folgenden Gewichtsprozenten gefertigt ist:
- Kautschuk 50%/60%;
- Kieselerde: 20%/30%;
- ein oder mehrere Weichmacheradditive: 2%/8%;
- ein oder mehrere Verträglichkeitsvermittler zwischen Kautschuk und Kieselsäure: 2%/3%;
- Pigmente: 3%/8%;
- ein oder mehrere Schutzmittel: 1%
- ein oder mehrere Vernetzungsmittel: 3%/8%,
wobei mineralische Bindemittel zu den Pigmenten auf eine Weise hinzugefügt werden, dass das Binden der Pigmente und der mineralischen Bindemittel eine mineralische Farbe ergibt.

2. Vollreifen (4; 8) nach Anspruch 1, **dadurch gekennzeichnet, dass** der Kautschuk vom synthetischen Typ ist.

3. Vollreifen (4; 8) nach Anspruch 1, **dadurch gekennzeichnet, dass** der Kautschuk vom natürlichen Typ ist.

4. Vollreifen (4; 8) nach einem der Ansprüche 1 bis 3, **dadurch gekennzeichnet, dass** die Schutzmittel von dem sogenannten "nichtfärbenden" Typ sind und dazu beitragen, die mineralische Farbe heller zu halten, wodurch die Migration von färbenden Komponenten auf die Oberfläche der Verbindung vermieden wird.

5. Vollreifen (4; 8) nach Anspruch 4, **dadurch gekennzeichnet, dass** die Schutzmittel aus der Kategorie der gehinderten Phenole ausgewählt sind.

6. Vollreifen (4; 8) nach einem der Ansprüche 1 bis 5, **dadurch gekennzeichnet, dass** die Verträglichkeitsvermittler zwischen Kautschuk und Kieselsäure aus der Kategorie von Silanen ausgewählt sind.

7. Vollreifen (4; 8) nach einem der Ansprüche 1 bis 6, **dadurch gekennzeichnet, dass** er aus einem superelastischen Reifen (4) besteht, umfassend eine Vielzahl von kreisförmigen Schichten aus elastischem Material, die sich in radialer Richtung überlappen, wobei die Schichten, ausgehend von der Mitte des superelastischen Reifens (4) zu dem Umfang hin, einen inneren Abschnitt oder Wulst (12), einen Zwischenabschnitt oder mittleren Abschnitt (14) und den äußeren Abschnitt oder Lauffläche (16) bilden.

8. Vollreifen (4; 8) nach Anspruch 7, **dadurch gekennzeichnet, dass** er ferner einen erhabenen kreisförmigen Abschnitt (22) umfasst, der auf der Schulter des superelastischen Reifens (4) an den Seiten des Kontaktbereichs zwischen dem äußeren Abschnitt oder Lauffläche (16) und dem Zwischenabschnitt oder dem mittleren Abschnitt (14) angeordnet ist.

9. Vollreifen (4; 8) nach Anspruch 8, **dadurch gekennzeichnet, dass** die mindestens eine Schicht zum Angeben von übermäßigem Verschleiß (10) in dem äußeren Abschnitt oder Lauffläche (16) an dem erhabenen kreisförmigen Abschnitt (22) angeordnet ist.

10. Vollreifen (4; 8) nach einem der Ansprüche 1 bis 6, **dadurch gekennzeichnet, dass** er aus einem POS/POB-Reifen (8) besteht, umfassend, ausgehend von der Mitte des POS/POB-Reifens (8) zu dem Umfang hin, einen inneren Abschnitt, der aus einem Metallring (24) besteht, und den äußeren Abschnitt oder Lauffläche (16), der/die um den Metallring (24) herum angebracht ist.

11. Vollreifen (4; 8) nach Anspruch 10, **dadurch gekennzeichnet, dass** er an einer vordefinierten Position innerhalb des äußeren Abschnitts oder Lauffläche (16) eine ferner Verschleißgrenze (26) umfasst, die konstruiert ist, um den Punkt eines übermäßigen Verschleißes des äußeren Abschnitts oder Lauffläche (16) anzugeben.

12. Vollreifen (4; 8) nach Anspruch 11, **dadurch gekennzeichnet, dass** die mindestens eine Schicht zum Angeben von übermäßigem Verschleiß (10) in dem äußeren Abschnitt oder Lauffläche (16) an der Verschleißgrenze (26) positioniert ist.

## Revendications

1. Pneumatique à bandage plein (4; 8) comprenant deux ou plusieurs couches circulaires superposées dans une direction radiale, dans lequel au moins la couche la plus externe est constituée d'un matériau élastique et est constituée d'une partie externe ou bande de roulement (16), dans lequel ledit pneumatique à bandage plein (4; 8) comprend en outre au moins une couche permettant d'indiquer une usure excessive (10), disposée dans une position prédéfinie à l'intérieur de ladite partie externe ou bande de roulement (16), et dans lequel ladite au moins une couche permettant d'indiquer une usure excessive (10) est réalisée avec une couleur différente de celle de ladite partie externe ou bande de roulement (16), ledit pneumatique solide (4; 8) étant **caractérisé en ce que** ladite au moins une couche permettant d'indiquer une usure excessive (10) est fabriquée avec le composé de matériaux suivant dans les pourcentages en poids suivants:
- caoutchouc: 50%/60%;
- silice: 20%/30%;
- un ou plusieurs additifs plastifiants: 2%/8%;
- un ou plusieurs agents de compatibilité entre le caoutchouc et la silice: 2%/3%;
- pigments: 3%/8%;
- un ou plusieurs agents protecteurs: 1%;
- un ou plusieurs agents réticulants: 3%/8%,
dans lequel des liants minéraux sont ajoutés aux pigments, de façon à ce que la liaison entre lesdits pigments et lesdits liants minéraux génèrent une couleur minérale.

2. Pneumatique à bandage plein (4; 8) selon la revendication 1, **caractérisé en ce que** le caoutchouc est de type synthétique.

3. Pneumatique à bandage plein (4; 8) selon la revendication 1, **caractérisé en ce que** le caoutchouc est de type naturel.

4. Pneumatique à bandage plein (4; 8) selon l'une quelconque des revendications 1 à 3, **caractérisé en ce que** les agents protecteurs sont du type dit « anti-taches » et contribuent à conserver la brillance de ladite couleur minérale, évitant ainsi la migration des composants colorants à la surface du composé.

5. Pneumatique à bandage plein (4; 8) selon la revendication 4, **caractérisé en ce que** les agents protecteurs sont choisis dans la catégorie des phénols à encombrement.

6. Pneumatique à bandage plein (4; 8) selon l'une quelconque des revendications 1 à 5, **caractérisé en ce que** les agents de compatibilité entre le caoutchouc et la silice sont choisis dans la catégorie des silanes.

7. Pneumatique à bandage plein (4; 8) selon l'une quelconque des revendications 1 à 6, **caractérisé en ce qu'**il est constitué d'un pneu super élastique (4) comprenant une pluralité de couches circulaires de matériau élastique superposées dans une direction radiale, lesdites couches formant, à partir du centre du pneu super élastique (4) vers la périphérie, une partie interne ou talon (12), une partie intermédiaire ou partie médiane (14) et ladite partie externe ou bande de roulement (16).

8. Pneumatique à bandage plein (4; 8) selon la revendication 7, **caractérisé en ce qu'**il comprend en outre une partie circulaire surélevée (22), disposée sur l'épaulement du pneu super élastique (4) sur les côtés de la zone de contact entre ladite partie externe ou bande de roulement (16) et ladite partie intermédiaire ou partie médiane (14).

9. Pneumatique à bandage plein (4; 8) selon la revendication 8, **caractérisé en ce que** ladite au moins une couche permettant d'indiquer une usure excessive (10) est positionnée dans ladite partie externe ou bande de roulement (16) au niveau de ladite partie circulaire surélevée (22).

10. Pneumatique à bandage plein (4; 8) selon l'une quelconque des revendications 1 à 6, **caractérisé en ce qu'**il est constitué d'un pneu POS/POB (8) comprenant, à partir du centre du pneu POS/POB (8) vers la périphérie, une partie interne constituée d'un anneau métallique (24) et ladite partie externe ou bande de roulement (16), qui est montée autour dudit anneau métallique (24).

11. Pneumatique à bandage plein (4; 8) selon la revendication 10, **caractérisé en ce qu'**il comprend en outre, dans une position prédéfinie à l'intérieur de ladite partie externe ou bande de roulement (16), une limite d'usure (26) conçue pour indiquer le point d'usure excessive de ladite partie externe ou bande de roulement (16).

12. Pneumatique à bandage plein (4; 8) selon la revendication 11, **caractérisé en ce que** ladite au moins une couche permettant d'indiquer une usure excessive (10) est positionnée dans ladite partie externe ou bande de roulement (16) au niveau de ladite limite d'usure(26).
